(19) Europäisches Patentamt
European Patent Office
Office européen des brevets

(11) Publication number: **0 258 053**
**A2**

(12) # EUROPEAN PATENT APPLICATION

(21) Application number: **87307586.5**

(22) Date of filing: **27.08.87**

(51) Int. Cl.⁴: **C 08 L 67/02**
C 08 L 23/06, C 08 J 5/18

(30) Priority: **28.08.86 US 901857**

(43) Date of publication of application:
**02.03.88 Bulletin 88/09**

(84) Designated Contracting States:
**AT BE CH DE ES FR GB GR IT LI LU NL SE**

(71) Applicant: **CELANESE ENGINEERING RESINS, INC.**
**26 Main Street**
**Chatham, New Jersey (US)**

(72) Inventor: **Yu, Thomas C.**
**54 Susan Drive**
**Chatham, N.J. (US)**

**O'Brien, David P.**
**735 Sheridan Avenue**
**Plainfield, N.J. (US)**

(74) Representative: **De Minvielle-Devaux, Ian Benedict Peter et al**
**CARPMAELS & RANSFORD 43, Bloomsbury Square**
**London WC1A 2RA (GB)**

(54) **Low wear polyarylate.**

(57) Polyarylates are modified to improve the low wear properties by adding to the polyarylate an ultra high molecular weight polyethylene.

**EP 0 258 053 A2**

## Description

### LOW WEAR POLYARYLATE

### BACKGROUND OF THE INVENTION

This invention is directed to polyarylate molding compositions and molded articles made therefrom having improved wear properties. More particularly, this invention is concerned with molded articles made from a novel thermoplastic polyarylate composition useful in low wear applications such as for the replacement of metals or in improving plastic to metal wear performance.

Linear aromatic polyesters prepared from dicarboxylic acids, especially from aromatic dicarboxylic acids and bisphenols are well known for their suitability for molding, extrusion, casting, and film-forming applications. For example, U.S. Patent No. 3,216,970 to Conix, discloses linear aromatic polyesters prepared from isophthalic acid, terephthalic acid, and a bisphenolic compound. Such high molecular weight compositions are known to be useful in the preparation of various films and fibers. Further, these compositions, when molded into useful articles using conventional techniques, provide properties superior to articles molded from other linear polyester compositions. For instance, aromatic polyesters are known to have a variety of useful properties, such as good tensile, impact, and bending strengths, high thermal deformation and thermal decomposition temperatures, resistance to UV irradiation and good electrical properties.

Present state of the art concerns have been to impart desired physical properties to polyarylate resins by inclusion of additives. For example, the impact properties of polyarylates have been increased by the addition of vinyl impact modifiers. A wide variety of impact modifiers, based on rubbers of polybutadiene, butadiene-styrene copolymers, etc., as well as hydrocarbon based elastomers having been suggested as additives to polyarylates to increase the impact properties of the polymers.

U.S. Patent No. 3,792,118 discloses a composition comprising 1 to 95% by weight of a styrene resin and about 99 to 5% by weight of a polyarylene ester. The styrene resin is dislcosed as a polystyrene copolymer which can include copolymerizing styrene, acrylonitrile, and/or methyl methacrylate to one of several rubbery high polymers. Among the rubbery polymers disclosed is a rubbery copolymer of ethylene, propylene, and diene or polybutadiene.

U.S. Patent No. 4,231,922 is specifically directed to improving the notched izod impact values of polyarylate molding compositions by the addition of a polyester derived from an aliphatic diol and an aromatic dicarboxylic acid and an impact modifier thereto. The impact modifiers disclosed as suitable for the invention comprise graft copolymers of a vinyl aromatic, an acrylate, and unsaturated nitrile, or mixtures thereof, grafted onto an unsaturated elastomeric backbone and having a tensile modulus of less than 100,000 psi.

U.S. Patent No. 4,281,079 also discloses improving the impact resistance of polyarylene esters by incorporating impact modifiers comprising an elastomeric ethylene 1-alkene copolymer such as ethylene and propylene or 1-butene. The ethylene copolymer may include a diolefin monomer which introduces unsaturated side groups. Among the diolefins disclosed are $C_5$ to $C_{10}$ nonconjugated dienes containing isolated double bonds

U.S. Patent No. 4,199,493 discloses improving the processability of reinforced polyarylene esters by intimately blending a polyarylene ester, a reinforcing agent and a vinyl addition polymer. The vinyl addition polymer can be prepared from vinyl monomers such as styrene, vinyl toluene, alkyl styrene, vinyl esters and rubbery components.

U.S. Patent No. 4,123,420 broadly states that the polyarylate compositions of the invention disclosed therein may contain at least one additional polymer such as polyalkylene terephthalates (e.g. polyethylene terephthalate or polybutylene terephthalate), poly(ethylene oxybenzoate), polycarbonates, polyethylene, polypropylene, polyamides, polyurethanes, polystyrene, ABS resins, EVA copolymers, polyacrylates, polytetrafluoroethylene, polymethyl methacrylates, polyphenylene sulfide, and rubbers.

It would be advantageous to impart to polyarylates characteristics not inherent in polyarylate resins or to improve upon particular physical properties without adversely affecting the desirable physical and chemical properties of polyarylates such as the inherent UV stability and high heat distortion temperature. Accordingly, the primary object of this invention is to improve the low wear properties of polyarylates without the consequent degradation of the desirable properties thereof.

### SUMMARY OF THE INVENTION

It has now been found that polyarylates containing relatively small amounts of ultra high molecular weight polyethylene have vastly improved low wear properties. Importantly, the low wear blend of polyarylate and ultra high molecular weight polyethylene retains the same inherent mechanical and thermal properties of the polyarylate.

### DETAILED DESCRIPTION OF THE INVENTION

The aromatic polyester used in this invention is obtained from terephthalic acid and/or isophthalic acid and/or functional derivatives thereof and a bisphenol of the following general formula (I)

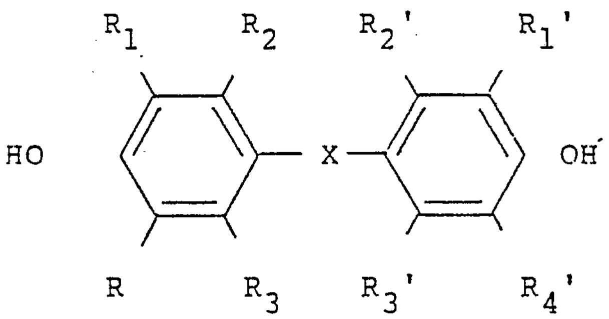

(I)

wherein -X- is selected from the group consisting of -O-, -S-, $-SO_2-$, -SO-, -CO-, an alkylene group containing 1 to 4 carbon atoms, and an alkylidene group containing 1 to 4 carbon atoms, and $R_1$, $R_2$, $R_3$, $R_4$, $R_1'$, $R_2'$, $R_3'$, and $R_4'$, which may be the same or different, each is selected from the group consisting of a hydrogen atom, a chlorine atom, a bromine atom and an alkyl group containing 1 to 4 carbon atoms, or functional derivatives thereof.

A mixture of about 90 to about 10 mole % of terephthalic acid and/or a functional derivative thereof and about 10 to about 90 mole % of isophthalic acid and/or a functional derivative thereof is preferred for use as the acid component to be reacted with the bisphenol to prepare the aromatic polyester as referred to in this invention. Preferably, a mixture of 20 to 80 mole % of terephthalic acid and/or a functional derivative thereof and 80 to 20 mole % of isophthalic acid and/or a functional derivative thereof is used. The molar ratio of bisphenol to the sum of the terephthalic acid units and isophthalic acid units is substantially equimolar.

Suitable functional derivatives of terephthalic or isophthalic acid which can be used include acid halides, dialkyl esters and diaryl esters. Preferred examples of acid halides include terephthaloyl dichloride, isophthaloyl dichloride, terephthaloyl dibromide and isophthaloyl dibromide. Preferred examples of dialkyl esters include dialkyl esters of terephthalic and isophthalic acids containing 1 to 6 (especially 1 to 2) carbon atoms in each alkyl moiety thereof. Preferred examples of diaryl esters inlcude diphenyl terephthalate and diphenyl isophthalate.

Examples of suitable bisphenols of the general formula (I) above are 4,4′-dihydroxy-diphenyl ether, bis(4-hydroxy-2-methylphenyl) ether, bis(4-hydroxy-3-chlorophenyl) ether, bis(4-hydroxyphenyl) sulfide, bis(4-hydroxyphenyl)sulfone, bis(4-hydroxyphenyl) ketone, bis(4-hydroxyphenyl)methane, bis(4-hydroxy-3-methylphenyl)methane, bis(4-hydroxy-3,5-dichlorophenyl)methane, bis(4-hydroxy-3,5-dibromophenyl)methane, 1,1-bis(4′-hydroxyphenyl)ethane, 2,2-bis(4′-hydroxy-3′-methylphenyl)propane, 2,2-bis(4′-hydroxy-3′-chlorophenyl (propane), 2,2-bis(4′-hydroxy-3′, 5′-dichlorophenyl)propane, 2,2-bis(4′-hydroxy-3,5′-dibromophenyl)propane, and 1,1-bis(4′-hydroxyphenyl)-n-butane. 2,2-bis(4′-hydroxyphenyl)propane, Bisphenol A, is most typical and is readily available, and, accordingly, is most often used.

Typical examples of functional derivatives of bisphenols which can be used are the metal salts thereof and the diesters thereof with aliphatic monocarboxylic acids containing 1 to 3 carbon atoms. Preferred functional derivatives of the bisphenols are the sodium salts, the potassium salts, and the diacetate esters thereof. The bisphenols may be used either alone or as a mixture of two or more thereof.

A more extensive list of bisphenols and dicarboxylic acid components for producing the polyarylates of this invention are described in U.S. 4,444,960, which patent is herein incorporated by reference.

Any known method can be used to produce these aromatic polyesters. Thus, the interfacial polymerization method which comprises mixing a solution of an aromatic dicarboxylic acid chloride in a water-immiscible organic solvent with an alkaline aqueous solution of bisphenol, the solution polymerization method which comprises heating a bisphenol and an acid chloride in an organic solvent, and the melt polymerization method which comprises heating a phenyl ester of an aromatic dicarboxylic acid and bisphenol, all of which are described in detail in U.S. Pat. Nos. 3,884,990, and 3,946,091, can, for example, be employed.

In order to insure the aromatic polyesters have good physical properties they should have an intrinsic viscosity (IV) of about 0.3 to about 1.0, preferably 0.4 to 0.8, determined in 1,1,2,2-tetrachloroethane at 30°C.

Typically the polymerization process is carried out in the presence of an acidic, neutral or basic catalyst, such classifications being based on the reaction of a conventional acid-base indicator and the catalyst when the latter is dissolved in a polar ionizing solvent such as water. More preferably, a basic catalyst is employed. Prior to its introduction into the reaction mass, the preferred basic catalyst is preferably converted to liquid form, e.g. by melting or by dissolution in a liquid or normally solid, low melting solvent. Suitable basic catalysts include the alkali metals, such as lithium, sodium, potassium, rubidium, cesium and francium and the carbonates, hydroxides, hydrides, borohydrides, phenates, bisphenates, (i.e. salt of a biphenol or bisphenol), carboxylates such as acetate or benzoate, oxide of the foregoing alkali metals. Group II and III elements can also be used in place of the alkali metals of the foregoing classes of compounds such as metals and compounds of calcium, magnesium and aluminum. Other bases include trialkyl or triaryl tin hydroxides, acetates, phenates, and the like. Examples of catalysts are lithium, sodium, potassium, rubidium, cesium and francium metals, potassium or rubidium carbonate, potassium hydroxide, lithium hydride, sodium borohydride,

potassium borohydride, calcium acetate, magnesium acetate, aluminum triisopropoxide and triphenyl tin hydroxide.

Phenol is the preferred solvent for the normally solid catalysts. Substituted phenols which can be used include those having the formula 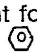 -$R_n$ wherein R is alkyl of 1 to 10 carbon atoms, alkoxy of 1 to 10 carbon atoms, aryl of 6 to 10 carbon atoms, chloro, bromo or mixtures thereof, and wherein n is 1 or 2. Typical solvents include o-benzyl phenol, o-bromo phenol, m-bromo phenol, m-chloro phenol, p-chloro phenol, 2,4 dibromo phenol, 2,6 dichloro phenol, 3,5 dimethoxy phenol, o-ethoxy phenol, m-ethyl phenol, p-ethyl-phenol, o-isopropyl phenol, m-methyoxy phenol, m-propyl phenol, p-propyl phenol, and the like. Other solvents which are particularly useful are of the ether type, for example, tetrahydrofuran and the various glymes, for examples, ethylene glycol dimethylether and the like.

Especially preferred liquid basic catalysts are charged dissolved in a molten normal solid-low melting organic solvent such as phenol. Especially preferred catalysts providing excellent results are the basic catalysts, rubidium phenoxide, potassium phenoxide, and potassium borophenoxide, each dissolved in molten phenol.

In accordance with conventional reaction practice, a catalytically effective amount of the catalyst is employed, for example, about 0.005 to about 2 mol percent or more, preferably about 0.01 to 1 mole percent of the bisphenol in accordance with known techniques of polyester formation.

While any of the known processes can be employed in synthesizing the polyarylates useful in this invention, conditions which are conventional for melt polymerization are especially preferred. According to the conventional practice, the solid reactants are heated above about 100° C, preferably above about 160° C to melt the reactants. Onset of reaction in the presence of catalyst is generally at a temperature ranging from above about 100° C to about 275° C, for example, above about 160° C for reaction of Bisphenol A, diphenyl terephthalate and diphenyl isophthalate. The reaction temperature employed is generally above about 100° C to about 400° C or higher, preferably above about 175° C to about 350° C, more preferably about 175° C to about 330° C with the reaction temperature being raised gradually during the polymerization. In the reaction, the aryl group of the diester is displaced as the corresponding relatively volatile monohydroxy aromatic compound, e.g. phenol, for which provision is made for removal, e.g. by distillation from the reaction mixture during the transesterification. Reaction pressure is generally diminished during the reaction, e.g. of about 0.1 mm. of mercury or lower, to aid in the aforementioned removal of the monohydroxy aromatic compound.

Generally, it is preferable in accordance with the prior art to carry out reaction in two stages. The first or prepolymerization stage is carried out at above about 100° C to about 350° C preferably about 160° C to about 330° C, especially about 180° C to about 300° C to prepare a low molecular weight polyester or prepolymer of relatively low intrinsic viscosity, e.g. of less than about 0.1 to about 0.3 dl./g. A subsequent polymerizaiton stage is then carried out in which the prepolymer is heated at a somewhat higher temperature namely, at above about 200° C to about 400° C or higher, preferably at about 225° C to about 350° C, especially at about 275° C to about 330° C. Conveniently, the polymerization stage is carried out in a different reaction vessel from that employed in the prepolymerization reaction stage with effective agitation of reaction mixture in both stages with generally more extreme agitation being used in the polymerization.

In carrying out the melt polymerization, it is preferred prior to catalyst addition to melt the normally solid reactants to provide molten reactants and then heat the reactants if necessary to a temperature sufficient for onset of polymerization. According to this embodiment, a basic catalyst for the polymerization that is normally solid at 30° C is then introduced in the liquid form to the polymerization concurrent with the molten reactants.

The ultra high molecular weight polyethylene which is added to improve the low wear properties of the polyarylate will have a molecular weight of at least about 1,000,000 (determined by ASTM D4020-81 specification), preferably at least about 2,000,000 and, more preferably will have a molecular weight range of about 3,000,000 to about 5,000,000. The ultra high molecular weight polyethylene is added in relatively small amounts to the polyarylate. Thus, amounts of about 1% by weight to about 5% by weight based on the total composition can be included in the polyarylate blend. Preferably, the ultra high molecular weight polyethylene is added in amounts of about 1 to 3%, with about 2% by weight being most preferred. At polyethylene levels above 5 wt.%, separation of the polymers may occur.

The composition blend of this invention is prepared by any conventional mixing method. For example, (a) mechanical blending in the molten state using roll mills or extruders, known as melt blending, (b) mixing in a common solvent or (c) mixing in a latex can be used. The preferred method comprises mixing the polyarylate and ultra high molecular weight polyethylene in powder or granular form in an extruder and extruding the mixture into strands, chopping the strands into pellets and molding the pellets into the desired article.

The polyarylate composition of this invention may further contain various other additives such as antioxidants, ultraviolet absorbers, antistatic agents and fire retardants, as needed according to the purpose of use. Examples of suitable antioxidants are conventional phenolic antioxidants, phosphite-type antioxidants, amine-type antioxidants, sulfur-containing compounds, organometallic compounds, and epoxy compounds. In addition, plasticizers, pigments and lubricants can also be incorporated in the aromatic copolyester composition of this invention. Alternatively the aromatic copolyester composition may be reinforced with fillers.

The fillers which may be employed in the invention are preferably particulate fillers such as particulate glass (e.g. chopped glass fiber, glass rovings, glass microballoons or microspheres and pulverulent glass) particulate clay, talc, mica, inorganic natural fibers, synthetic organic fibers, alumina, graphite, silica, calcium

carbonate, carbon black, magnesia, and the like. Generally such fillers are added to reinforce the structural integrity of a polymer, e.g. to inhibit sagging and/or to improve the tensile strength and stiffness of the polymer composition and also to reduce shrinkage, minimize crazing, lower material costs, impart color or opacity, and improve the surface finish of the polymer composition. However, the addition of fillers must be carefully considered inasmuch as certain fillers may actually degrade some mechanical properties including the wear properties of the polyarylate composition of this invention. Generally the amount of particulate filler employed in the compositions of the invention is in the range of about 5 to about 70 weight percent. The filler employed preferably is inorganic and more preferably is particulate glass and especially is glass fiber.

When the filler employed is particulate glass and especially is glass fiber, it is preferred that an organic coupling agent be present as a very thin coating on the glass particles. The coupling agent, which is preferably an organic silane, forms an adhesive bridge between the glass and the polymer blend thereby enhancing the strength properties of the filled polymer blend.

If desired, the aromatic copolyester composition of this invention may contain at least one additional polymer such as polyalkylene terephthalates (e.g., polyethylene terephthalate or polybutylene terephthalate), poly(ethylene oxybenzoate), polycarbonates, lower molecular weight polyethylenes, polypropylene, polyamides, polyurethanes, polystyrene, ABS resins, EVA copolymers, polyarcylates, polytetrafluoroethylene, polymethyl methacrylates, polyphenylene sulfide, and rubbers.

The polyarylate compositions of this invlention can be used to form many useful articles employing generally known molding methods such as injection molding, extrusion molding or press molding. Typical examples of final products obtained by molding are films, monofilaments, and injection molded articles such as machine parts, automobile parts, electrical component parts, vessels and springs. The polyarylate compositions of this invention also are particularly useful as engineering plastics for various applications where the excellent properties of high heat stability and UV resistance are required. Thus, the novel low wear polyarylate blend of this invention can be used in high temperature environments such as plastic conveyor chains which must withstand high heat distortion temperatures under load. Likewise the low ear polyarylates can find use in outdoor low wear applications such as seed spreaders and guide rollers because of the inherent UV reactions of polyarylate.

The following examples are given to illustrate the present invention in more detail. It should be noted that the invention is in no way to be construed as being limited to these examples. Unless otherwise indicated, all parts, percents, ratios, and the like are by weight.

EXAMPLE 1

A blend of polyarylate and ultra high molecular weight polyethylene was tested in a time to wear study against steel at 50 psi and 300 fpm (feet per minute). The test was conducted on a Falex multi-specimen test machine manufactured by the Falex Corporation of Aurora, Ill. The machine is a thrush washer configuration in which the polymer blend was injection molded into a 1-1/8 inch wear disk with a 1/16 inch raised wear rim, and the thickness of the wear rim is 1/16 inch. The wear disk was rotated against a wear base of C1018 carbon steel RC30. The test is a short term wear test which measures the "Time to Wear Failure" to fail the wear specimen. The specimen is claimed to be wear resistant, or "unfailed", if it lasts more than 120 minutes under testing. The type of low wear tested here can be characterized as interfacial or sliding wear and not as abrasive or impact wear.

In this example, a "Durel" (Trademark of Celanese Corp.) polyarylate formed by the melt polymerization of Bisphenol A and a 75/25 mixture of diphenyl iso/terephthalate was blended with 2% by weight of a "Hostalen GUR 412" (Trademark of American Hoechst Coporation) ultra high molecular weight polyethylene having a molecular weight of about 3.3. million as determined by ASTM D-4020-81. The sample blend when tested as described above was unfailed after 120 minutes which is the maximum time for this test. A sample containing the same "Durel" polyarylate described above without the ultra high molecular weight polyethylene addition failed before 30 minutes of time had elapsed.

EXAMPLE 2

The polyarylate resin as described in Example 1 was blended with the same ultra high molecular weight polyethylene in amounts of 1% by weight and 3% by weight. Various mechanical and physical properties were tested by standardized methods as well as the "Time to Wear Failure" test described in Example 1. The results are shown in Table 1.

TABLE 1

DUREL/HOSTALEN UHMWPE BLENDS

| | Blend ratios wt% UHMWPE | | |
|---|---|---|---|
| Tensile | 1% UHMWPE | 3% UHMWPE | Durel |
| Tensile Stress @ Break Psi | 9290 | 8210 | 9256 |
| Elongation @ Break % | 9.5 | 11.6 | 13.7 |
| Flexural | | | |
| Flex Stress @ 5% Strain KPsi | 12.9 | 12.7 | 13.0 |
| Flex Modulus KKPsi | 0.334 | 0.318 | 0.341 |
| Time to Wear Failure, minutes | >120 | >120 | >30 |
| Thermal | | | |
| HDTUL @ 264 psi 1/8 inch, °C | 146 | 149 | 153 |
| Impact | | | |
| Notched Izod, 1/8" Ft.-lb/inch Notch | 1.72 | 1.80 | 4.10 |

As can be seen, with the addition of the small amounts of ultra high molecular weight polyethylene (UHMWPE) the tensile and flexural properties of the polyarylate are substantially the same. Similarly, the thermal stability of the polyarylate is maintained. Notched Izod is reduced as expected. Importantly, both polyarylate/UHMWPE blends show a "Time to Wear Failure" of more than 120 minutes, in comparison to less than 30 minutes for Durel.

## Claims

1. A polyarylate molding composition having improved low wear properties comprising in admixture a polyarylate derived from a dihydric phenol and an aromatic dicarboxylic acid and an amount of polyethylene having a molecular weight of at least about 1,000,000 sufficient to improve the low wear properties of said polyarylate.

2. The composition of claim 1 wherein said polyarylate is derived from a dihydric phenol or a mixture of dihydric phenols, said dihydric phenol having the structural formula:

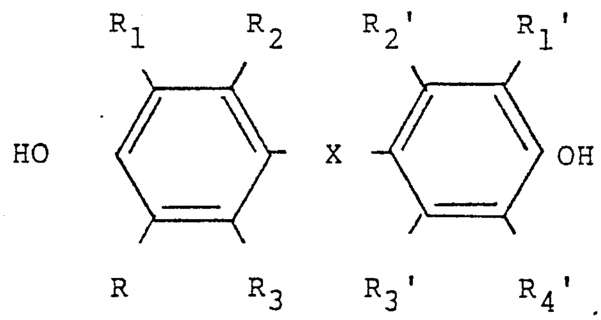

wherein -X- is selected from the group consisting of -O-, -S-, $-SO_2-$, -SO-, -CO-, an alkylene group containing 1 to 4 carbon atoms, and an alkylidene group containing 1 to 4 carbon atoms, and $R_1$, $R_2$, $R_3$, $R_4$, $R_1'$, $R_2'$, $R_3'$, and $R_4'$, which may be the same or different, each is selected from the group consisting of a hydrogen atom, a chlorine atom, a bromine atom and an alkyl group containing 1 to 4 carbon atoms, or functional derivatives thereof.

3. The composition of claim 2 wherein the polyarylate is derived from Bisphenol A and an aromatic dicarboxylic acid.

4. The composition of claim 1 wherein the polyarylate is derived from a dihydric phenol and terephthalic acid or a functional derivative thereof or isophthalic acid or a functional derivative thereof, or mixtures thereof.

5. The composition of claim 1 wherein said polyethylene has a molecular weight of at least about 2,000,000.

6. The composition of claim 1 wherein said polyethylene has a molecular weight of from about 3,000,000 to about 5,000,000.

7. The composition of claim 4 wherein said dicarboxylic acid comprises a mixture of 20 to 80 mol % of terephthalic acid or a functional derivative thereof and 80 to 20 mol % of isophthalic acid or a functional derivative thereof.

8. The composition of claim 1 wherein said polyethylene is present in amounts of about 1% to about 5% by weight based on the total composition.

9. The composition of claim 8 wherein said polyethylene is present in amounts of about 1% to about 3% by weight based on the total composition.

10. The composition of claim 9 wherein said polyethylene is present in amounts of about 2% by weight of the total composition.

11. A fiber having the composition of claim 1.

12. The fiber of claim 11 wherein said polyethylene has a molecular weight of about 3,000,000-5,000,000.

13. A film having the composition of claim 1.

14. The film of claim 13 wherein said polyethylene has a molecular weight of about 3,000,000-5000,000.

15. A molded article having the composition of claim 1.

16. The molded article of claim 15 wherein said polyethylene has a molecular weight of about 3,000,000-5,000,000.